# EUROPÄISCHE PATENTSCHRIFT

(11) **EP 0 753 631 B1**
(45) Veröffentlichungstag und Bekanntmachung des Hinweises auf die Patenterteilung: **10.05.2000**
(21) Anmeldenummer: 96110981.6
(22) Anmeldetag: 08.07.1996
(51) Int. Cl.: E03B 3/03, B01D 35/02

(54) **Regenwasser-Nutzungs-und Reinigungseinrichtung**
Rainwater collecting and cleaning device
Dispositif pour collecter et nettoyer des eaux pluviales

(30) Priorität: 11.08.1995 DE 29512893 U; 14.07.1995 DE 19525588
(43) Veröffentlichungstag der Anmeldung: 15.01.1997
(73) Patentinhaber: Hofheinz, Ottmar, 82041 Deisenhofen (DE)
(72) Erfinder: Hofheinz, Ottmar, 82041 Deisenhofen (DE)
(74) Vertreter: von Kirschbaum, Albrecht, Dipl.-Ing.

(56) Entgegenhaltungen:
- WO-A-93/11310
- AU-A- 7 004 081
- DE-A- 4 307 066
- DE-C- 3 934 633

## Beschreibung

Die Erfindung betrifft eine Regenwasser-Nutzungs einrichtung, ggf mit einer Reinigungseinrichtung.

Bei bisher angebotenen und eingesetzten Regenwasser-Nutzungsanlagen ohne Reinigung müssen einteilige oder aus mehreren Teilen vor Ort zu montierende, sperrige Behältnisse mit einem Gesamtfassungsvermögen zwischen 1 bis 5cbm oder mehr, mitunter auf Spezialfahrzeugen an den Einsatzort befördert werden. Ferner müssen für solche großvolumigen Behältnisse entsprechend große Gruben ausgehoben werden, die in vielen Fällen, insbesondere bei bereits angelegten Gärten oft sogar in mühsamer Handarbeit erstellt werden, da ein Zugang mit entsprechenden Baufahrzeugen, wie Kleinbaggern u.ä. oft überhaupt nicht oder nur unter starker Beeinträchtigung bzw. teilweiser Zerstörung des angelegten Gartens möglich ist.

Da solche Regenwasser-Nutzungsanlagen an sich schon verhältnismäßig teuer sind, fallen neben den oft beträchtlichen Transportkosten durch die erforderlichen Aushubarbeiten noch weitere, nicht unerhebliche Kosten an.

Um solche teueren und aufwendigen Aushubarbeiten zu vermeiden, werden beispielsweise vorhandene Behälter, wie Sickergruben in Regenwasser-Nutzungsanlagen umgebaut. Hierzu müssen diese Behältnisse, die zumeist aus mehreren übereinandergesetzten Betonringen bestehen, abgedichtet werden. Spätestens nach wenigen Jahren treten Undichtigkeiten auf, so daß diese vorhandenen Behälter in regelmäßigen Abständen erneut abgedichtet werden müssen. Da die entsprechenden Behältnisse zum Abdichten leer und trocken sein müssen, ist ein regelmäßiges Abdichten kosten- und arbeitsintensiv.

Aus DE 39 34 633 C1 (entspricht dem Oberbegriff der Ansprüche 1 und 2) ist ein Regenwasser-Sammelkörper bekannt, der in eine Sickergrube einsetzbar ist. Es handelt sich hierbei um einen zylindrischen Hohlkörper, dessen Oberseite offen ist. Der Außendurchmesser des zylindrischen Hohlkörpers ist kleiner als der Innendurchmesser der Sickergrube, so daß zwischen dem zylindrischen Hohlkörper und der Sickergrube ein Ringspalt ausgebildet ist. Nachteilig bei vorstehendem Regenwasser-Sammelkörper ist, daß es sich um einen einteiligen Behälter handelt, der aus Stabilitätsgründen relativ massiv ausgebildet sein muß und somit schwer ist. Zum Einsatz dieses Regenwasser-Sammelbehälters sind zwar keine Aushubarbeiten erforderlich; die vorstehend beschriebenen hohen Transportkosten und das aufwendige Einsetzen des Behälters in die vorhandene Sickergrube bleiben aber erhalten.

Da der obere Bereich von Sickergruben ein konisch zulaufendes Abschlußteil aufweist, das beispielsweise einen Sickergrubendurchmesser von 1m auf 60 cm verringert, ist der maximale Durchmesser des Regenwasser-Sammelkörpers durch den verringerten Durchmesser begrenzt. Somit ist das tatsächlich von dem Regenwasser-Sammelbehälter genutzte Sammelvolumen erheblich kleiner als das Volumen der Sickergrube.

Aus AU-A-70 040/81 ist ferner ein Sammelbehälter für Regenwasser bekannt, der oberirdisch aufgestellt wird. In dem Sammelbehälter ist ein Foliensack vorgesehen, dessen oberer Randbereich um die Oberkante des Sammelbehälters geführt und mittels Schrauben an diesem besfestigt ist. Der Sammelbehälter ist von einer Abdeckung verschlossen, in der ein Filter angeordnet ist, durch den das Regenwasser in den Sammelbehälter geleitet wird.

Ein weiteres Problem bei Regenwasser-Nutzungseinrichtungen besteht darin, daß das Regenwasser möglichst frei von Laub, kleinen Ästen oder anderen Verschmutzungen sein muß, damit es ohne Probleme aus dem Auffangbehälter beispielsweise abgepumpt werden kann.

Aus DE 43 07 066 A1 ist es bekannt, eine Zisterne zum Sammeln und Speichern von Regenwasser aufzubauen, in welche als eine Art Zwischenboden eine Trägerscheibe eingesetzt ist, die den gesamten Querschnitt der Zisterne überspannt und mehrere Durchbrüche aufweist, in welche Filterplatten eingesetzt sind. Nachteilig bei vorstehend beschriebener Zisterne zum Sammeln von Regenwasser ist vor allem, daß die Trägerscheibe ein äußerst großes und schwierig herzustellendes Teil ist, das zu dem auf den Rand der beispielsweise zylinderförmigen Zisterne aufgelegt werden muß.

Da die Zuleitung zu der Zisterne aus Frostschutzgründen und wegen der erforderlichen Neigung unter der Erdoberfläche verläuft, muß zum Umbau einer vorhandenen Sickergrube diese zumindest bis in eine Tiefe von 60cm freigelegt und der obere Betonring heruntergenommen werden. Zusätzlich weist das Verwenden von Filterplatten den Nachteil auf, daß diese beispielsweise durch Laub schnell verstopft werden, so daß entweder die Verschmutzungen in den Sammelbehälter gelangen oder bei entsprechend vorgesehenen Abflüssen zwar keine Verschmutzungen in den Sammelbehälter gelangen, aber bei verstopftem Filter auch kein bzw. nur wenig Wasser gesammelt wird. Daher müssen solche Filter häufig gereinigt werden.

Da die Filterplatten aus Porenbeton hergestellt sind, weisen sie außerdem den Nachteil auf, daß die Filterplatten leicht verkeimen können, d.h. abgelagerte Samenkörner beginnen zu keimen und verstopfen somit die Filterplatten. Verkeimte Filterplatten lassen sich nur äußerst aufwendig reinigen und sind teilweise völlig unbrauchbar und müssen daher ersetzt werden.

Ferner ist aus EP 0 102 355 B1 ein Filter bekannt, bei welchem in einen Haltering ein kegelstumpfförmiger Grobfilter eingesetzt wird und an dem Haltering zur Feinfilterung ein flexibler und wasserdurchlässiger Beutel aus Stoff oder Textilmaterial befestigt ist, so daß der wasserdurchlässige Beutel dem kegelstumpfförmigen Grobfilter nachgeschaltet ist.

Der zweite Filterbereich aus Stoff oder Textilmaterial reißt insbesondere an den Aufhängungen am Haltering leicht aus, wenn sich eine große Menge Ablagerungen im Beutel befindet. Ferner ist der Beutel schwer zu reinigen, da es sich um flexibles Material handelt und das Gewebe leicht verstopft. Aufgrund der feuchten Umgebung, in der sich der Filter befindet, verkeimt das Gewebe sehr schnell. Verkeimtes Gewebe läßt sich nicht mehr vollständig reinigen und muß somit ersetzt werden. Insbesondere ist aber auch mit vorstehend beschriebenem Filter das Problem nicht gelöst, daß der erste kegelestumpfförmige Filter beispielsweise durch Laub schnell verstopft und insofern häufig gereinigt werden muß.

Um das Verstopfen von Filtern zu vermeiden, sind ferner sogenannte Selbstreinigungsfilter bekannt. Bei Selbstreinigungsfiltern wird nur ein Teil des verschmutzten Wassers gereinigt und der verbleibende Teil des Wassers zum Abtransport der Verschmutzungen und somit zur Reinigung des Filters verwendet. Bekannte Selbstreinigungsfilter weisen insbesondere den Nachteil auf, daß bei starken Regenfällen nur etwa 50% des verschmutzten Wassers gereinigt und somit gesammelt wird. Ferner weisen bekannte Selbstreinigungsfilter den Nachteil auf, daß zwischen dem Zu- und Abfluß eine Höhendifferenz von 30 bis 50cm besteht. Somit müssen an Selbstreinigungsfilter anschließende Speicher oder Rohrleitungen entsprechend tiefer im Erdreich eingebaut werden, wodurch zusätzliche Kosten entstehen.

Aufgabe der Erfindung ist es daher, eine Regenwasser-Nutzungseinrichtung zu schaffen, die ohne allzu große Schwierigkeiten beispielsweise in bereits bestehende oder zum Betreiben einer Regenwasser-Nutzungsseinrichtung angelegte Betonschächte u.ä., einsetzbar ist.

Gemäß der Erfindung ist diese Aufgabe bei einer Regenwasser-Nutzungseinrichtung durch die Merkmale im Anspruch 1 und 2 gelöst. Vorteilhafte Weiterbildungen sind Gegenstand der auf den Anspruch 1 und 2 unmittelbar oder mittelbar rückbezogenen Ansprüche.

Mit einer bevorzugten Ausführungsform der erfindungsgemäßen Regenwasser-Nutzungseinrichtung lassen sich beispielsweise vorhandene Betonschächte, beispielsweise in Form von aufgelassenen Sickergruben, Öltanks u.ä. ausgesprochen kostengünstig und in technisch einwandfreier Ausführung in Regenwasser-Nutzungsanlagen umwandeln. Hierzu muß lediglich im Bereich des vorhandenen Betonschachts beispielsweise bis zur Tiefe eines häufig asymmetrischen, konischen Betonschacht-Abschlußteil aufgegraben werden, um dann etwa in dieser Höhe im obersten Betonschachtring einen Durchgang bzw. Durchbruch zum Durchführen von Leitungen vorzusehen.

Wird die Regenwasser-Nutzungseinrichtung bei Behältern eingesetzt, die zuvor bereits einen Zu- und Ablauf aufgewiesen haben, entfallen vorstehend beschriebene, geringfügige Aushubarbeiten.

Anschließend braucht bei dieser bevorzugten Ausführungsform nurmehr in den asymmetrischen, konischen Abschlußteil ein fertig montiertes Einbauformteil eingehängt und befestigt werden, an welchem ein in Abmessung und Fassungsvermögen dem Volumen des Betonschachts entsprechender Foliensack sicher gehaltert ist. Anschließend sind dann Rohrleitungen auf für Zulauf bzw. Überlauf vorgesehene Stutzen am Einbauformteil aufzustecken oder mit diesen zu verschrauben und ein entsprechend vorbereitetes Rohr für eine Wasserentnahme einzusetzen.

Durch das Verwenden und Einbringen eines aus einem widerstandsfähigen, wasserundurchlässigen Folienmaterial bestehenden, sich vorzugsweise im oberen Bereich verjüngenden Foliensacks, der am unteren Randbereich des Einbauformteils befestigt ist, das somit bei dieser bevorzugten Ausführungsform gleichzeitig als Aufhängungseinrichtung für den Foliensack und zur Aufnahme von Zu- und/oder Ablauf- und/oder Entnahmerohren dient, ist ein absolut dichtes Behältnis geschaffen. Ein zeitaufwendiges und nur für einen verhältnismäßig kurzen Zeitraum dichtes Verfugen der einzelnen aufeinandergesetzten Ringe des Betonschachtes entfällt.

Ferner werden gegenüber herkömmlichen Betonschächten, die, wie die Erfahrung zeigt, über längere Zeit nur dann dicht sind, wenn sie aus einem Stück gefertigt sind, abgesehen von den Anlagekosten obendrein auch noch erhebliche Frachtkosten für die Anlieferung eingespart. Da das Regenwasser nicht mit dem Beton in Berührung kommt, wird außerdem ein Aufhärten des Wassers verhindert.

Mit der Regenwasser-Nutzungseinrichtung gemäß der Erfindung lassen sich jedoch auch bei Neuanlagen, beispielsweise in Verbindung mit einem Hausneubau, dadurch erhebliche Kosten sparen, daß lediglich mittels eines am Bau ohnehin meist vorhandenen Baggers ohne Schwierigkeit eine entsprechende Grube ausgehoben werden kann, in die anschließend entsprechend dem gewünschten Fassungsvermögen der fertigen Anlage eine Anzahl Betonringe aufeinander gesetzt und beispielsweise durch ein asymmetrisches konisches Abschlußteil abgeschlossen werden.

Auch in diesem Fall brauchen dann nur noch die vorstehend beschriebenen Vorbereitungsarbeiten ausgeführt und das vormontierte Einbauformteil mit dem befestigten Foliensack eingebracht werden, um auf einfache Weise kostengünstig eine Regenwasser-Nutzungsanlage zu schaffen, bei welcher aufgrund des an dem Einbauformteil befestigten Foliensacks ein absolut dichtes Wassersammelbehältnis erreicht ist.

Eine weitere bevorzugte Ausführungsform eignet sich insbesondere für Neuanlagen. Hierzu werden in eine entsprechende Grube Betonringe eingesetzt. In einer Tiefe von mindestens 60cm wird ein vorzugsweise zylindrischer Foliensack an dem obersten Betonring mittels einer Aufhängungseinrichtung eingehängt. Anschließend wird auf den oberen Betonring eine Abschlußplatte aufgelegt, in die in eine kreisrunde Öffnung beispielsweise ein Einbauformteil zur Aufnahme eines oder mehrerer Zu- und/oder Ablauf- und/oder Entnahmerohre einsetzbar ist. Das bei Sickergruben oder bei Kanalschächten üblicherweise verwendete konische Abschlußteil wird auf die Abdeckplatte aufgesetzt. Bei Neuanlagen kann somit der Einbauaufwand gegenüber der vorstehend beschriebenen Regenwasser-Nutzungsanlage, bei welcher der Foliensack direkt am Einbauformteil befestigt ist, um bis zu 75% gesenkt werden.

Um kein Auflauf- oder Überlaufrohr vorsehen zu müssen, wird in einer bevorzugten Weiterbildung der Erfindung bei jeder der vorstehend beschriebenen Ausführungsformen die Seitenwandung des Betonschachts innen mit einer Drainmatte ausgekleidet, die vorzugsweise aus einem beidseitig mit Flies kaschiertem Wirrgelege gebildet ist. Somit entsteht zwischen dem Foliensack und dem Betonschacht eine Art Ringspalt, durch den überschüssiges Wasser ablaufen kann.

Gemäß einer vorteilhaften Weiterbildung der Erfindung ist das Einbauformteil kreiszylindrisch ausgeführt und aus glasfaserverstärktem Kunststoff hergestellt. Gemäß einer weiteren bevorzugten Ausführungsform der Erfindung läßt sich das Behältnis in Form des Foliensackes vorzugsweise mittels eines Spannrings am unteren Randbereich des kreiszylinderförmigen Einbauformteils sicher befestigen.

Darüber hinaus läßt sich durch in der Länge verstellbare Aufhängungen das Einbauformteil der erfindungsgemäßen Regenwasser-Nutzungseinrichtung in der gewünschten Tiefe bzw. in dem gewünschten Abstand von der Oberfläche, beispielsweise in einer Tiefe von 60 bis 70cm oder noch tiefer einhängen, so daß auf diese Weise eine frostsichere Regenwasser-Nutzungsanlage zu realisieren ist.

Bei einer bevorzugten Weiterbildung des Einbauformteils, das in Verbindung mit der vorstehend beschriebenen Drainmatte einsetzbar ist, läuft das im Speicherbehälter nicht mehr unterzubringende Wasser durch Schlitze ab, die im unteren Bereich des Einbauformteils vorgesehen sind. Somit kann das überschüssige Wasser sowohl durch eine Wandlochung der Betonwand als auch durch den offenen Boden des Sickerschachtes, wie üblich, versickern.

Ferner kann zur Reinigung des Regenwassers in dem Einbauformteil eine Regenwasser-Reinigungseinrichtung wie ein Filter vorgesehen sein, der in zwei benachbarte Bereiche unterteilt ist. Die beiden Bereiche des Filters sind so voneinander getrennt, daß Verschmutzungen des ungereinigten Regenwassers, wie beispielsweise Laub oder kleine Äste hauptsächlich nur in einem Bereich abgelagert werden.

Bei einer Ausführungsform des erfindungsgemäßen Filter ist auf der Seite des Zulaufs ein vertikal angeordnetes Trennblech vorgesehen, das sich über die gesamte Breite des Filters erstreckt und mit einer Groblochung oder groben Maschen versehen ist. An der Unterseite des vertikalen Trennblechs ist zur Feinfilterung mit diesem ein horizontal angeordnetes, fein gelochtes oder feinmaschiges Bodenblech fest verbunden. Der Filter ist vorzugsweise aus nicht-rostendem Material, wie beispielsweise Edelstahl V2A hergestellt.

Aufgrund dieser Ausbildung des Filters ist neben einer gründlichen Filterung des zulaufenden Wassers obendrein sichergestellt, daß ein Verstopfen bzw. Verschließen des Filters durch größere Mengen von Grobschmutz weitgehend unterbunden ist.

Bei einer weiteren bevorzugten Ausführungsform des Filters, der ebenfalls zwei benachbarte Bereiche aufweist, ist ein Bereich vorzugsweise halbkugelförmig nach oben gewölbt und der zweite Bereich kreisringförmig, wobei dessen kleinerer Durchmesser dem Durchmesser des vorzugsweise halbkugelförmigen Bereichs entspricht und mit dessen Kante verbunden ist. Das zugeführte, ungereinigte Regenwasser kann durch den gelochten, halkugelförmigen Bereich abfließen und wird dabei gefiltert. Das herausgefilterte Material lagert sich in dem unterhalb des halbkugelförmigen Bereichs angeordneten kreisförmigen Bereich ab, so daß der halbkugelförmige Bereich nicht verstopft.

Bei einer weiteren bevorzugten Ausführungsform des Filters ist dieser als Selbstreinigungsfilter mit zwei Bereichen aufgebaut. Das über einen Zulauf zugeführte ungereinigte Regenwasser trifft auf einen ersten geneigten Filterbereich. Somit wird einerseits das Wasser gereinigt und gelangt durch den geneigten Filter in einen Auffangbereich und andererseits werden die sich auf dem Filter ablagernden Verunreinigungen von nachströmendem Regenwasser aufgrund der Neigung des ersten Filterbereichs von diesem in einen zweiten Bereich abgewaschen. Die von dem geneigten Filterbereich abgewaschenen Verunreinigungen werden in einen Ablauf geschwemmt. Um auch bei einer großen Menge an zugeführtem Regenwasser die Verlustmenge möglichst gering zu halten, ist der Auffangbereich gegenüber dem Bereich, in welchem das ungereinigte Regenwasser eingeleitet wird, ständig abgedichtet.

Gegenüber herkömmlichen Selbstreinigungsfiltern weist der erfindungsgemäße Selbstreinigungsfilter insbesondere die Vorteile auf, daß auch bei erhöhter Wasserzufuhr etwa 80% des zugeführten Wassers gereinigt werden und außerdem zwischen der Unterkante des Zuführrohrs und der Oberkante des Abführrohrs lediglich eine Höhendifferenz von 5cm notwendig ist.

Zum Einsetzen der vorstehend beschriebenen Filter in das Einbauformteil sind das Einbauformteil und der Filter so aufeinander abgestimmt, daß der Filter einfach herausnehmbar ist.

Falls eine der beiden Ausführungsformen der Filter mit zwei Bereichen verwendet wird, und das Wasser zu viel Schmutz mitführt, so daß der zur Verfügung stehende Raum zwischen dem grob gelochten Trennblech und dem Zulaufstutzen bzw. der kreisringförmige Bereich um den halbkugelförmigen Bereich nicht ausreicht, kann der Filter ohne Schwierigkeiten herausgehoben werden; hierzu ist beispielsweise an dem vertikalen Trennblech eine entsprechende Öse oder ein nach oben klappbarer Bügel, der am Außenbereich des Filters befestigt ist vorgesehen.

Durch den in das Einbauformteil integrierten und zu Reinigungszwecken leicht entnehmbaren Filter, vorzugsweise aus Edelstahl V2A, ist durch eine feine Abfilterung für sauberes Wasser gesorgt und aufgrund der flächigen Einrieselung des Wassers in ein Behältnis, beispielsweise in Form des Foliensackes ein beruhigter Zulauf sichergestellt.

Darüber hinaus kann für die Wasserentnahme eine Absauggarnitur vorgesehen werden, die neben einem auf die jeweilige Tiefe des Betonschachtes einstellbaren Rohr einen Filterkorb sowie ein Rückschlagventil aufweist.

Ferner besteht in dem Einbauformteil die Möglichkeit, einen Wasserstandswächter für eine Wasser-Notnachspeisung vorzusehen. Hierbei ist dieser Nachrüstsatz so ausgelegt, daß nur das tatsächlich benötigte Wasser nachgespeist wird.

Nachfolgend wird die Erfindung anhand bevorzugter Ausführungsformen unter Bezugnahme auf die anliegenden Zeichnungen im einzelnen erläutert. Es zeigen:
- Fig.1: eine teilweise im Schnitt wiedergegebene perspektivische Darstellung einer bevorzugten Ausführungsform der wesentlichen Teile einer Regenwasser-Nutzungs- und Reinigungseinrichtung gemäß der Erfindung;
- Fig.2: eine Schnittdarstellung der Regenwasser-Nutzungs- und Reinigungseinrichtung der Fig.1 entlang einer Ebene II-II in einer bezüglich Fig.1 entgegengesetzten Blickrichtung;
- Fig.3 und 4: im Schnitt wiedergegebene perspektivische Darstellungen weiterer bevorzugter Ausführungsformen der wesentlichen Teile einer Regenwasser-Nutzungs- und Reinigungseinrichtung gemäß der Erfindung;
- Fig.5a: eine perspektivische Einzeldarstellung einer bevorzugten Ausführungsform einer erfindungsgemäßen Regenwasser-Reinigungseinrichtung;
- Fig.5b: eine Schnittansicht des in Fig.3a dargestellten Regenwasser-Reinigungseinrichtung;
- Fig.Sc: eine gegenüber der Fig.3b um 90° gedrehte Schnittansicht eines in ein schematisch angedeutetes Einbauformteil der Regenwasser-Nutzungseinrichtung eingesetzte Regenwasser-Reinigungseinrichtung;
- Fig.6a: eine Draufsicht auf eine weitere bevorzugte Ausführungsform der Regenwasser-Reinigungseinrichtung;
- Fig.6b: eine Schnittansicht der in Fig.6a dargestellten Regenwasser-Reinigungseinrichtung entlang der Linie VI - VI, und
- Fig.7: eine persektivische Ansicht einer weiteren bevorzugten Ausführungsform einer Regenwasser-Reinigungseinrichtung in Verbindung mit einem Einbauformteil der Regenwasser-Nutzungseinrichtung.

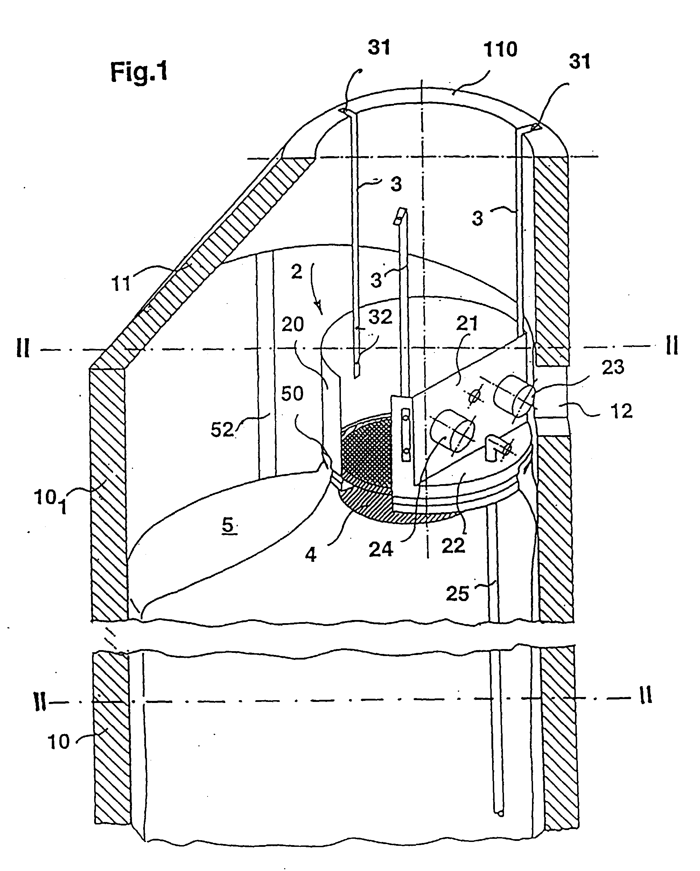

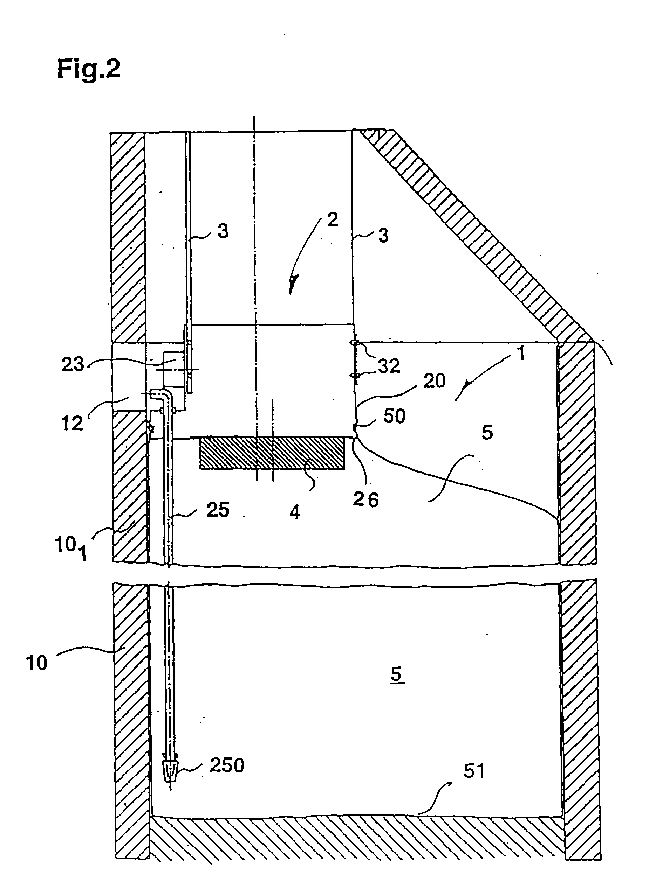

In Fig.1 ist im Schnitt ein Betonschacht 10 dargestellt, der, was in den Figuren im einzelnen nicht dargestellt ist, im allgemeinen aus mehreren Betonringen gebildet ist und dessen Bodenfläche Erdreich 13 (Fig.2) bildet. Den oberen Abschluß des Betonschachtes 10 bildet ein asymmetrisches konisches Abschlußteil 11. Ferner ist unmittelbar unterhalb des Abschlußteils 11 des im allgemeinen kreiszylinderförmigen Betonschachtes 10 ein Durchbruch 12 ausgebildet.

Mittels - in der wiedergegebenen Ausführungsform - drei Aufhängungen 3 ist ein in seiner Gesamtheit mit 2 bezeichnetes Einbauformteil von der oberen ringförmigen Fläche 110 des Abschlußteils 11 in den Betonschacht 10 eingehängt. Mittels Schrauben 31 sind die Aufhängungen 3 an dem Betonschacht-Abschlußteil 11 und mittels weiterer Schrauben 32 an einem kreiszylinderförmigen Gehäuseteil 20 des Einbauformteils 2 befestigt.

Obwohl es in den Zeichnungen im einzelnen nicht dargestellt ist, sind die Aufhängungen 3 verstellbar ausgeführt, so daß die Einhängetiefe beispielsweise bezogen auf die Oberkante eines an dem kreiszylindrischen Gehäuseteil 20 vorgesehenen Zulauf-Stutzens 23 im Bereich von 60 bis 75cm liegt. Nicht dargestellte, mit dem Zulauf- und einem Überlauf-Rohrstutzen 23 bzw. 24 verbundene Rohre sind durch den Durchbruch 12 nach außen geführt, welcher im allgemeinen im oberen Bereich des ersten Ringes des Betonschachtes 10 vorzusehen ist.

Die Zulauf-und Überlauf-Stutzen 23 und 24 stehen senkrecht von einem entlang einer Sekante des kreiszylindrischen Gehäuseteils 20 verlaufenden Querteils 21 vor.

Ferner ist an der Unterseite des Querteils 21 eine kreissegmentförmige, nach außen vorstehende Abstufung 22 vorgesehen. In dieser Abstufung 22 des Einbauformteils 2 ist beispielsweise ein abgewinkeltes Rohr 25 für eine Wasserentnahme befestigt. Wie der Schnittdarstellung der Fig.2 zu entnehmen ist, ist am unteren Ende des für eine Wasserentnahme vorgesehenen Rohrs 25 ein Auffangkorb 250 angebracht. Ferner kann im Rohr 25 auch noch ein nicht näher dargestelltes Rückschlagventil untergebracht sein.

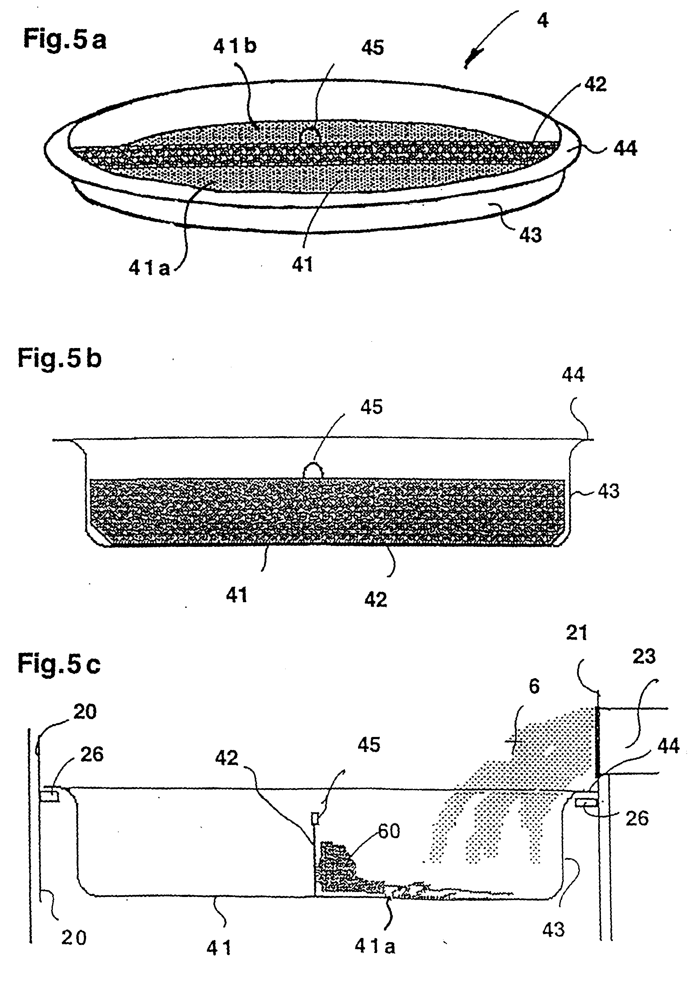

Wie der Schnittansicht der Fig.2 zu entnehmen ist, ist am unteren Ende des Einbauformteils 2 eine ins Innere des kreiszylindrischen Gehäuseteils 20 vorstehende, kreisringförmige Auflage 26 ausgebildet. Auf dieser Auflage 26 liegt ein kreisringförmiger Rand 44 (siehe Fig.5a) einer in ihrer Gesamtheit mit 4 bezeichneten Regenwasser-Reinigungseinrichtung.

An dem unteren Randbereich des Einbauformteils 2 ist ein Behältnis in Form eines sogenannten Foliensackes 5 vorzugsweise mittels eines Spannbandes 50 sicher gehaltert und damit an dem Einbauformteil 2 befestigt. Der als Behältnis dienende Foliensack 5 ist hinsichtlich Abmessung und Fassungsvermögen den entsprechenden Größen des Betonschachts 10 angepaßt; dessen Tiefe und damit dessen Fassungsvermögen ist durch die Anzahl von - in den Figuren nicht näher dargestellten - übereinandergesetzten Ringen festgelegt.

An dem Foliensack sind zwei oder mehr Haltebänder 52 befestigt, von denen in Fig.1 eines dargestellt ist. Die Haltebänder 52 sind nach dem Einhängen des Einbauformteils 2 in das Betonschacht-Abschlußteil 11 zwischen der Oberkante des obersten kreiszylinderförmigen Betonringes 10₁ des Betonschachtes 10 und der Unterkante des Abschlußteils 11 einzuklemmen. Durch die Haltebänder 52 ist verhindert, daß der Foliensack 5, welcher sonst nur beispielsweise mittels des Spannbandes 50 am Einbauformteil 2 befestigt ist, in leerem Zustand in sich zusammenfällt. Die Haltebänder 52 werden vorzugsweise bei neu angelegten Betonschächten 10 verwendet, da sie lediglich eine zusätzliche Halterung für den Foliensack 5 darstellen und nicht unbedingt erforderlich sind. Anstatt die Haltebänder 52 zwischen zwei Betonringen 10₁ und 11 einzuklemmen, können sie auch beispielsweise mittels Schrauben an dem Betonschacht 10 befestigt werden.

Wie aus Fig.2 zu ersehen ist, liegt eine kreisförmige Bodenfläche 51 des Foliensacks 5 auf in Fig.2 durch Schrägschraffur angedeutetes Erdreich 13 auf. Der Auffangkorb 250 am unteren Ende des zur Wasserentnahme vorgesehenen Rohrs 25 ist in einem angemessenen Abstand, beispielsweise in der Größenordnung von 20 cm, oberhalb der Bodenfläche 51 des Foliensacks angeordnet.

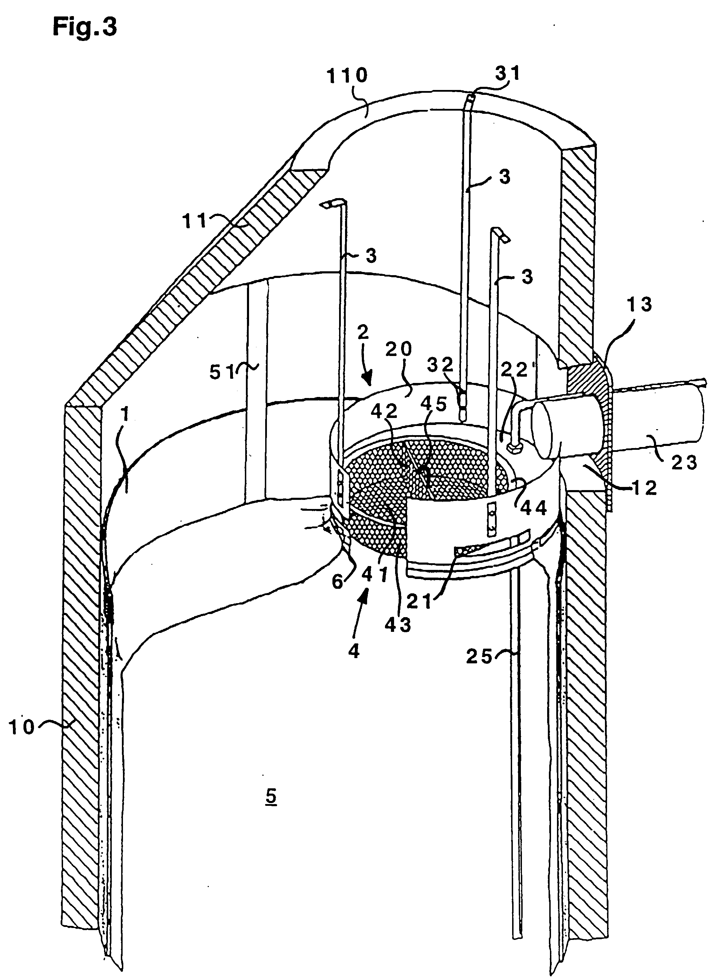

Fig.3 ist eine teilweise im Schnitt dargestellte perspektivische Darstellung einer weiteren bevorzugten Ausführungsform der Regenwasser-Nutzungs- und Reinigungseinrichtung. Gegenüber der in Fig.1 und 2 dargestellten Ausführungsform unterscheidet sich die in Fig.3 dargestellte Ausführungsform hauptsächlich dadurch, daß die innere Seitenwandung des Betonschachts 10 mit einer sogenannten Drainmatte 1 ausgekleidet ist, die vorzugsweise ein beidseitig mit Flies kaschiertes Wirrgelege ist und deren oberer Rand etwa in der Höhe der Oberkante des Foliensacks endet.

Da aufgrund der Drainmatte 1 der Foliensack 5 nicht direkt an dem Betonschacht 10 anliegt, kann durch die Drainmatte 1 Wasser nach unten sickern. Da somit kein Überlauf bzw. Abfluß erforderlich ist, kann das in seiner Gesamtheit mit 2 bezeichnete Einbauformtteil folgendermaßen vereinfacht werden:

Ein Zulaufrohr 23 ist über Gummidichtungen in einer Anschlußplatte 13 dicht gehalten, durch welche der im Betonschacht 10 vorgesehene Durchbruch 12 verschlossen ist. Ferner ist in der Anschlußplatte 13 ein zur Wasserentnahme vorgesehenes Rohr vorgesehen, das durch eine sichelförmige, waagrecht verlaufende Abstufung 22' des Einbauformteils 2 geführt ist und in ein in der Zeichnung senkrecht nach unten führendes Rohr 25 übergeht.

In der kreiszylinderförmigen Seitenwand 20 des Einbauformteils 1 sind unten etwa auf Höhe eines Bodenblechs 41 einer nachstehend als Filter bezeichneten Regenwasser-Reinigungseinrichtung 4 rechteckige Längsschlitze ausgebildet, von denen zur Vereinfachung der Darstellung nur ein Längsschlitz 21 dargestellt ist.

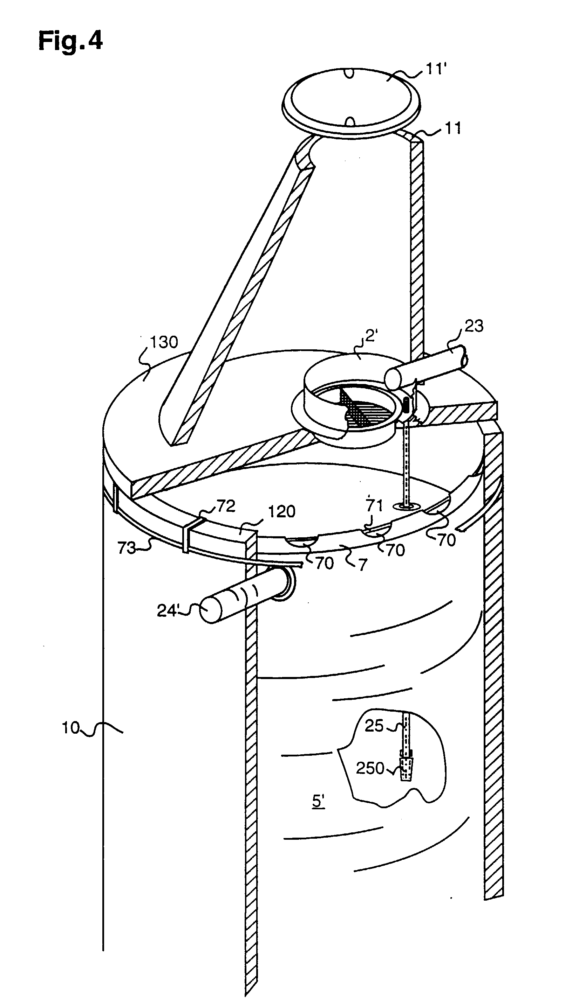

In Fig.4 ist eine weitere bevorzugte Ausführungsform der Regenwasser-Nutzungs- und Reinigungseinrichtung teilweise im Schnitt perspektivisch dargestellt. Die in Fig.4 dargestellte bevorzugte Ausführungsform unterscheidet sich von den in Fig.1 bis 3 dargestellten Ausführungsformen im wesentlichen dadurch, daß der Foliensack 5' nicht mit dem Einbauformteil 2' verbunden ist, sondern direkt am Betonschacht 10 befestigt ist. Hierzu weist der Foliensack 5' entlang seines oberen Randes eine Tasche 7 auf, in der ein kreisförmiger Federstab 71 vorgesehen ist.

Vorzugsweise ist der Durchmesser des Federstabs 71 geringfügig größer als der Innendurchmesser des Betonschachts 10. Um den Federstab 71 an dem Betonschacht 10 zu befestigen, weist die Tasche 7 eine Anzahl Ausnehmungen 70 auf, so daß der Federstab 71 in den Ausnehmungen 70 nicht von dem Foliensack 5' umschlossen ist. Aufhängungen 72, die vorzugsweise zweifach rechtwinklig gebogene Haltebänder sind, deren Enden U-förmig gebogen sind, werden von oben über den oberen Rand 120 des Betonschachts 10 gesteckt, so daß an den in das Innere des Betonschachts 10 weisenden U-förmigen Enden der Aufhängungen 72 jeweils die Bereiche des Federstabs 71 eingehängt werden können, die nicht von dem Foliensack 5' umschlossen sind. Die ebenfalls U-förmig gebogenen Enden der Aufhängungen 72, die bei auf den oberen Rand 120 des Betonschachts 10 aufgesteckten Aufhängungen nach außen weisen, werden mittels eines Spannbandes 73 an dem äußeren Umfang des Betonschachts 10 fixiert.

Entsprechend der in Fig.3 dargestellten Ausführungsform kann zwischen dem Foliensack und der Innenwandung des Betonschachts 10 ebenfalls eine in Fig.4 nicht dargestellte Drainmatte vorgesehen sein. Zusätzlich oder anstatt der Drainmatte kann ein Ablauf 24' als Überlauf vorgesehen sein.

Auf den oberen Rand 120 des Betonschachts 10 wird eine Abschlußplatte 130 gelegt. Die Abschlußplatte 130 weist zur Aufnahme eines Einbauformteils 2' eine beispielsweise kreisrunde Öffnung auf. Das Einbauformteil 2', in dem eine, der anhand der Fig.5 bis 7 beschriebenen Filtervarianten eingesetzt werden kann, dient zusätzlich zur Aufnahme des Zulaufrohrs 23. Ferner kann von dem Einbauteil 2' entsprechend den Ausführungsformen in Fig.1 bis 3 eine Entnahmerohr 25 aufgenommen werden.

Da die gesamte Anordnung aus Frostschutzgründen mindestens 60cm unter der Erdoberfläche angeordnet sein sollte, wird auf die Abdeckplatte 130 ein beispielsweise konisches Abschlußteil 11, das mit einem Deckel 11' verschließbar ist, aufgesetzt. Somit kann durch ein einfaches Abnehmen des Deckels 11' beispielsweise aus dem Einbauformteil 2' der Filtereinsatz herausgenommen werden.

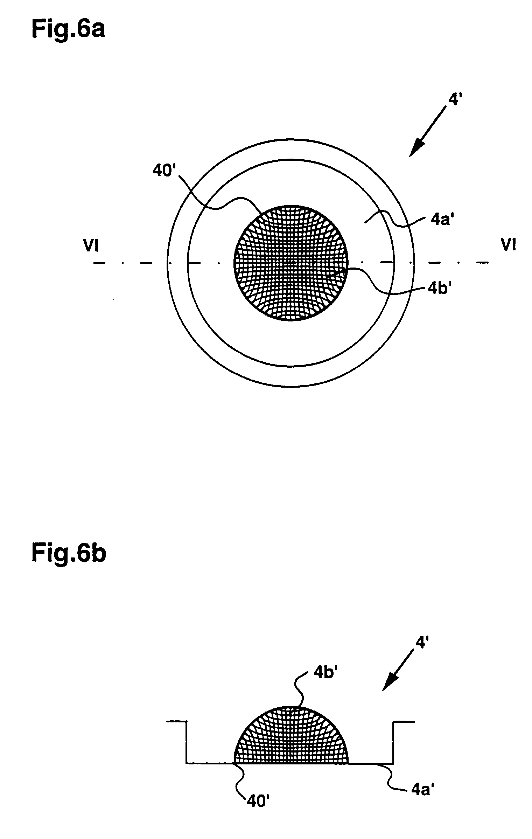

Anhand der Fig.5 und 6 werden im folgenden verschiedene Ausführungsformen von Regenwasser-Reinigungseinrichtungen beschrieben, die wahlweise in die Einbauformteile der vorstehend beschriebenen Regenwasser-Nutzungseinrichtungen einsetzbar sind.

Der Filter 4 weist, wie aus Fig.5a und 5b ersichtlich, ein kreisförmiges, fein gelochtes oder feinmaschiges Bodenblech 41 für eine Feinfilterung sowie ein diagonal zum Bodenblech 41 verlaufendes, vertikales, erheblich grober gelochtes bzw. mit groben Maschen versehenes Trennblech 42 für eine Grobfilterung auf. Das Trennblech 42 ist sowohl mit dem kreisförmigen Bodenblech 41 als auch mit einem kreiszylinderförmigen Seitenrand 43 des Filters 4 dicht verbunden. Ferner ist in der Mitte der Trennwand eine nach oben vorstehende Öse 45 vorgesehen, um den Filter 4 gegebenenfalls zu Reinigungszwecken aus dem Einbauformteil 2 herauszuheben.

Nachfolgend wird anhand einer Schnittansicht in Fig.5c die Wirkungsweise des bei der erfindungsgemäßen Regenwasser-Nutzungs- und Reinigungseinrichtung verwendeten Filters beschrieben. Über den Zulaufstutzen 23 einströmendes Regenwasser 6 kann eine gewisse Menge Grobschmutz 60 enthalten. Wie in der Schnittansicht der Fig.5c angedeutet, setzt sich der Grobschmutz 60 zum Teil auf dem feingelochten Bodenblech 41 ab, sammelt sich jedoch insbesondere vor und an dem senkrecht vom Bodenblech 41 nach oben vorstehenden Trennblech 40.

Selbst wenn der in Fig.5c bezogen auf das Trennblech 42 rechte Bereich des beispielsweise feingelochten Bodenblechs 41 verstopft sein sollte, läßt das beispielsweise grobgelochte Trennblech 42 immer noch genug Wasser zu dem in Fig.5c linken Bereich des Bodenblechs 41 durch. Somit ist durch das Filter mit zwei Bereichen, das vorzugsweise aus nichtrostendem Material, wie Edelstahl V2A, hergestellt ist, dafür gesorgt, daß sauberes Wasser mit dem Effekt eines beruhigten Zulaufs flächig in den als Sammelbehältnis dienenden Foliensack 5 oder ein anderes Behältnis rieselt.

In Fig.6a und 6b ist eine weitere bevorzugte Ausführungsform der Regenwasser-Reinigungseinrichtung in einer Draufsicht und in einer Schnittansicht entlang der Linie VI - VI in Fig.6a dargestellt. Entsprechend des anhand der Fig.5a bis 5c beschriebenen Filters weist auch der in Fig.6a und 6b dargestellte Filter zwei Bereiche 4a' und 4b' auf. Der Bereich 4b' ist ein in Fig.6b nach oben gewölbter, vorzugsweise halbkugelförmiger Bereich aus gelochtem oder feinmaschigem Material. Der Bereich 4a' ist kreisringförmig, wobei dessen kleinerer Durchmesser dem Durchmesser des gewölbten oder halbkugelförmigen Bereichs 4b' entspricht und mit dessen unterer Kante 40' verbunden ist.

Wird nun ungereinigtes Regenwasser in Fig.6b seitlich oder auch von oben auf den gewölbten Bereich 4b' geleitet, so wird das Wasser von diesem Bereich gefiltert und tritt in Fig.6b nach unten innerhalb der durch die Kante 40' begrenzten, kreisförmigen Öffnung aus. Die aus dem Wasser gefilterten Verschmutzungen lagern sich in dem mit 4a' bezeichneten Bereich ab. Somit weist der in Fig.6a und 6b dargestellte Filter entsprechend dem in Fig.5a bis 5c dargestellten Filter den Vorteil auf, auch bei stark verschmutztem Regenwasser erheblich langsamer zu verstopfen als herkömmliche Filter.

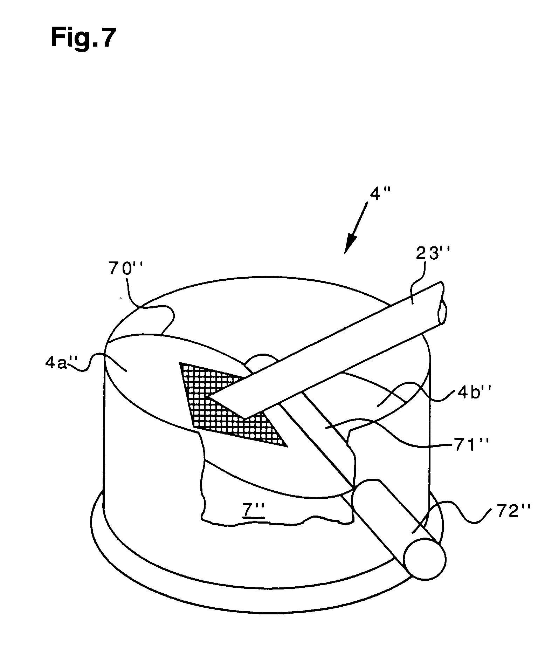

Fig.7 zeigt eine weitere bevorzugte Ausführungsform einer Regenwasser-Reinigungseinrichtung, die in der in Fig.7 dargestellten Ausführungsform nicht in ein Einbauformteil 2 (Fig.1 bis 4) einsetzbar ist, sondern eine besondere Ausführungsform eines Einbauformteils darstellt. Der in Fig.7 dargestellte Filter könnte jedoch auch als Einsatz für ein Einbauformteil 2 ausgebildet werden.

Bei dem in Fig.7 dargestellten Filter handelt es sich um einen selbstreinigenden Filter, der einen ersten geneigten Filterbereich 4a" aufweist, der entsprechend der vorstehend beschriebenen Filter gelocht oder feinmaschig ist. Über einen Zulauf 23" wird ungereinigtes Regenwasser auf den geneigten Filterbereich 4a" geleitet, so daß gefiltertes Regenwasser nach unten in einen Auffangbereich 7" gelangt, der, wie in Fig.7 nicht dargestellt, beispielsweise in den Foliensack 5 in Fig.1 oder 5' in Fig.4 übergeht. Die sich auf dem geneigten Filterbereich 4a" ansammelnden Verschmutzungen werden durch nachfließendes, ungereinigtes Regenwasser auf dem geneigten Filter nach unten in Richtung eines zweiten Bereichs 4b" geschwemmt. Der zweite Bereich 4b" weist einen im Querschnitt U-förmig nach oben in Richtung des geneigten Filterbereichs 4a" geöffneten Ablauf 71" auf, an dem ein Ablaufstutzen 72" angeschlossen ist. Das durch den Ablaufstutzen 72" abgeführte, stark verschmutzte Regenwasser muß in einen gesonderten Behälter oder beispielsweise in den Abwasserkanal geführt werden.

Wie eingangs bereits ausgeführt, ist durch die erfindungsgemäße Regenwasser-Nutzungs- und Reinigungseinrichtung bei vorhandenen Betonschächten, wie beispielsweise aufgelassenen Sickergruben eine ausgesprochen kostengünstige und hinsichtlich ihres Einbaus einfach zu handhabende Lösung geschaffen. Obendrein ist mit der erfindungsgemäßen Regenwasser-Nutzungs- und Reinigungseinrichtung die Schwierigkeit hinsichtlich Undichtigkeiten, die nur bei aus einem Stück bestehenden Anlagen nicht gegeben sind, durch das Einbringen des an dem Einbauformteil befestigten Foliensackes in einfacher und sehr wirkungsvoller Weise beseitigt.

Die erfindungsgemäße Regenwasser-Nutzungs- und Reinigungseinrichtung ist aber auch in Verbindung mit Neuanlagen verwendbar und einsetzbar, sofern die Möglichkeit besteht, eine Anzahl Betonringe unterzubringen. Auch in diesem Fall ist die erfindungsgemäße Regenwasser-Nutzungs- und Reinigungseinrichtung gegenüber herkömmlichen Betonanlagen, die, über einen längeren Zeitraum betrachtet, nur sehr bedingt als dicht bezeichnet werden können, allein schon deswegen besonders kostengünstig, da, abgesehen von den Anlagekosten selbst die Regenwasser-Nutzungs- und Reinigungseinrichtung gemäß der Erfindung hinsichtlich der Frachtkosten sehr preiswert an den Einsatzort gebracht werden kann und ohne Schwierigkeit in den erstellten Betonschacht eingebracht werden kann.

## Patentansprüche

1. Regenwasser-Nutzungseinrichtung, mit einem in einem Betonschacht (10) angeordneten Behälter und einem Zulaufrohr (23) dadurch **gekennzeichnet**, daß der Behälter flexibel, in Form eines Foliensacks (5) ausgebildet ist und mittels eines Spannbandes (50) an einem als Aufhängungseinrichtung dienenden Einbauformteil (2) sicher gehaltert ist, daß das Zulaufrohr (23) in dem Einbauformteil (2) aufgenommen ist, und daß das Einbauformteil (2) mittels Aufhängungen (3) am oberen Rand (110) des Betonschachts (10) eingehängt und befestigt ist.

2. Regenwasser-Nutzungseinrichtung, mit einem in einem Betonschacht (10) angeordneten Behälter und einem Zulaufrohr (23) dadurch **gekennzeichnet**, daß der Behälter flexibel, in Form eines Foliensacks (5') ausgebildet ist und mittels einer Aufhängungseinrichtung in dem Betonschacht (10) eingehängt und befestigt ist, wobei als Aufhängungseinrichtung in einer entlang des Umfangs im oberen Randbereich des Foliensacks (5') verlaufenden Tasche (7) ein kreisförmiger Federstab (71) vorgesehen ist, und die Tasche (7) Ausnehmungen (70) aufweist, um den Federstab (71) an Aufhängungen (72) einzuhängen, die an einem oberen Rand (120) des Betonschachts (10) gehaltert sind, und daß das Zulaufrohr (23) in dem Einbauformteil (2) aufgenommen ist.

3. Einrichtung nach Anspruch 2, dadurch **gekennzeichnet**, daß die Aufhängungen (72) im wesentlichen zweifach rechtwinklig gebogene Haltebänder sind, wobei die Enden einerseits zur Aufnahme des Federstabs (71) im Inneren des Betonschachts (10) und andererseits zur Aufnahme eines Spannbandes (73) U-förmig gebogen sind, wobei das Spannband (73) zur Fixierung der Aufhängungen (72) um den äußeren Umfang des Betonschachts (10) geführt ist.

4. Einrichtung nach einem der Ansprüche 1 bis 4, dadurch **gekennzeichnet,** daß das Zulaufrohr (23) und ein Ablaufrohr (24) und/oder ein Entnahmerohr (25) mittels des Einbauformteils (2,2') aufgenommen sind.

5. Einrichtung nach Anspruch 5, dadurch **gekennzeichnet,** daß das Einbauformteil (2') in eine Öffnung in einer auf den oberen Rand (120) des Betonschachts (10) angeordnete Abschluß-platte (130) eingesetzt ist.

6. Einrichtung nach einem der Ansprüche 1, 4, 5 oder 6, dadurch **gekennzeichnet**, daß das Einbauformteil (2,2') kreiszylinderförmig ausgeführt und aus glasfaserverstärktem Kunststoff hergestellt ist.

7. Einrichtung nach einem der vorhergehenden Ansprüche, dadurch **gekennzeichnet,** daß die Seitenwandung des Betonschachts (10) innen mit einer Drainmatte (1) ausgekleidet ist.

8. Einrichtung nach Anspruch 8, dadurch **gekennzeichnet,** daß die Drainmatte (1) aus einem beidseitig mit Flies kaschiertem Wirrgelege gebildet ist.

9. Einrichtung nach einem der Ansprüche 1, 4 oder 5, dadurch **gekennzeichnet,** daß in dem Einbauformteil (2,2') ein Filter (4; 4'; 4") angeordnet ist, der in zwei benachbarte Bereiche (41a, 41b; 4a', 4b'; 4a", 4b") so unterteilt ist, daß Verunreinigungen nur in einen Bereich (41a; 4a'; 4b") gelangen.

10. Einrichtung nach Anspruch 10, dadurch **gekennzeichnet,** daß die beiden Bereiche (41a, 41b) durch ein vertikal angeordnetes, quer über die Breite des Filters (4) verlaufendes Trennblech (42) mit Groblochung voneinander getrennt sind und an der unteren Kante des Trennblechs (42) ein horizontal angeordnetes kreisförmiges Bodenblech (41) mit Feinlochung vorgesehen ist.

11. Einrichtung nach Anspruch 11, dadurch **gekennzeichnet,** daß die Seitenkante des horizontal angeordneten, kreisförmigen Bodenblechs (41) mit Feinlochung mit einem kreiszylinderförmigen Seitenrand (43) des Filters (4) mit Feinlochung verbunden ist.

12. Einrichtung nach Anspruch 10, dadurch **gekennzeichnet,** daß der eine Bereich (4b') gelocht und gewölbt ist, und der andere Bereich (4a') kreisringförmig ist, wobei dessen kleinerer Durchmesser dem Durchmesser des gewölbten Bereichs (4b') entspricht und mit desse Kante (40') verbunden ist.

13. Einrichtung nach Anspruch 10, dadurch **gekennzeichnet,** daß ungereinigtes Regenwasser auf den einen geneigten Filterbereich (4a") geleitet wird, und auf dem einen Filterbereich (4a") abgelagerte Verunreinigungen durch nachfließendes, ungereinigtes Regenwasser in den anderen Bereich (4b") gelangt und in einen Ablauf (71") geleitet wird, wobei der geneigte Filterbereich (4a") gegenüber einem Auffangbereich (7") dicht ist.

14. Einrichtung nach einem der vorhergehenden Ansprüche dadurch **gekennzeichnet**, daß in der Seitenwandung (20) des Einbauformteils (2) unten etwa auf Höhe des Filter-Bodenblechs (41) mindestens ein Längsschlitz (21) ausgebildet ist.

15. Einrichtung nach einem der vorhergehenden Ansprüche, dadurch **gekennzeichnet**, daß Filter (4, 4', 4") und Spannband (50, 70, 73) aus nicht-rostendem Material, wie Edelstahl V2A, hergestellt sind.

## Claims

1. A rain-water utilary means comprising a reservoir arranged in a concrete manhole (10) and a feed pipe (23), characterized in that said reservoir is configured flexible in the form of a plastic bag (5) and is reliably held in place by means of a tensioning strap (50) on a fitting (2) serving as a hanger means, that said feed pipe (23) is received by said fitting (2) and that said fitting (2) is hung and secured in place at the upper edge (110) of said concrete manhole (10) by means of hangers (3).

2. A rain-water utilary means comprising a reservoir arranged in a concrete manhole (10) and a feed pipe (23), characterized in that said reservoir is configured flexible in the form of a plastic bag (5') and is hung and secured in place in said concrete manhole (10) by means of a hanger means, a circular spring rod (71) being provided as said hanger means in a pocket (7) running along the circumference in the upper end portion of said plastic bag (5'), and said pocket (7) comprising recesses (70) for hanging said spring rod (71) on hangers held in place at an upper edge (120) of said concrete manhole (10) and that said feed pipe (23) is received by said fitting (2).

3. The means as set forth in claim 2, characterized in that said hangers (72) are substantially double right-angled retaining straps, the ends being bent U-shaped, on the one hand, for receiving said spring rod (71) in the interior of said concrete manhole (10) and, on the other, for receiving a tensioning strap (73) guided about said outer circumference of said concrete manhole (10) for locating said hangers (72) in place.

4. The means as set forth in any of the claims 1 to 3, characterized in that said feed pipe (23) and a drain pipe (24) and/or an extraction pipe (25) are received by means of said fitting (2, 2').

5. The means as set forth in claim 4, characterized in that said fitting (2') is inserted in an opening in a cover (130) arranged on the upper edge of said concrete manhole (10) .

6. The means as set forth in any of the claims 1, 3, 4 or 5 characterized in that said fitting (2) is configured right-cylindrical and fabricated of glass-fiber reinforced plastics material.

7. The means as set forth in any of the preceding claims, characterized in that the side wall of said concrete manhole (10) is lined with a drain mat (1).

8. The means as set forth in claim 7, characterized in that said drain mat (1) is formed of a tangled mesh laminated sandwiched between two plies of felting.

9. The means as set forth in any of the claims 1 3 or 4, characterized in that arranged in said fitting (2, 2') is a filter (4; 4'; 4") split into two adjacent portions (41a, 41b; 4a', 4b'; 4a", 4b") so that soilage gains access only to one portion (41a; 4a'; 4b").

10. The means as set forth in claim 9, characterized in that said two portions (41a, 41b) are separated from each other by a coarse-perforated partitioning plate (42) arranged vertically and transversely covering the width of said filter (4) and a horizontal arranged circular finely perforated bottom plate (41) is provided at the lower edge of said partitioning plate (42).

11. The means as set forth in claim 10, characterized in that the side edge of said horizontal arranged circular finely perforated bottom plate (41) is connected to a right-cylindrical side edge (43) of said finely perforated filter (4).

12. The means as set forth in claim 9, characterized in that the one portion (4b') is perforated and curved and the other portion (4a') is circularly annular, the smaller diameter of the latter corresponding to the diameter of said curved portion (4') and is connected to the edge (40') thereof.

13. The means as set forth in claim 9, characterized in that soiled rain-water is directed to the one inclined filter portion (4a") and soilage deposited on the one filter portion (4a") gains access to the other portion (4b") by a subsequent flow of soiled rain-water and is directed into a drain (71"), said inclined filter portion (4a") being sealed off from a collecting portion (7").

14. The means as set forth in any of the preceding claims, characterized in that at least one slot (21) is formed in said side wall (20) of said fitting (2) at the bottom roughly level with said filter bottom plate (41).

15. The means as set forth in any of the preceding claims, characterized in that filter (4, 4', 4") and tensioning strap (50, 70, 73) are made of a stainless steel, such as V2A stainless steel.

## Revendications

1. Dispositif pour récupérer les eaux pluviales, comportant un récipient agencé dans un puits en béton (10) et un tube d'amenée (23), caractérisé en ce que le récipient est flexible, réalisé sous forme d'un sac en film (5) et maintenu de façon sûre au moyen d'un ruban de serrage (50) sur une pièce conformée à encastrer (2) servant de dispositif de suspension, en ce que le tube d'amenée (23) est reçu dans la pièce conformée à encastrer (2), et en ce que la pièce conformée à encastrer (2) est suspendue et fixée au moyen de suspensions (3) à la bordure supérieure (110) du puits en béton (10).

2. Dispositif pour récupérer les eaux pluviales, comportant un récipient agencé dans un puits en béton (10) et un tube d'amenée (23), caractérisé en ce que le récipient est flexible, réalisé sous forme d'un sac en film (5') suspendu et fixé au moyen d'un dispositif de suspension dans le puits en béton (10), dans lequel est prévue, en tant que dispositif de suspension, une tige élastique circulaire (71) dans une poche (7) qui s'étend le long de la périphérie dans la zone de bordure supérieure du sac en film (5'), et la poche (7) présente des évidements (70) pour accrocher la tige élastique (71) sur des suspensions (72) qui sont maintenues sur une bordure supérieure (120) du puits en béton (10), et en ce que le tube d'amenée (23) est reçu dans la pièce conformée à encastrer (2).

3. Dispositif selon la revendication 2, caractérisé en ce que les suspensions (72) sont des rubans de retenue recourbés sensiblement deux fois à angle droit, les extrémités étant recourbées en forme de U d'une part pour recevoir la tige élastique (71) dans l'intérieur du puits en béton (10) et d'autre part pour recevoir un ruban de serrage (73), le ruban de serrage (73) étant mené autour de la périphérie extérieure du puits en béton (10) pour fixer les suspensions (72).

4. Dispositif selon l'une quelconque des revendications 1 à 3, caractérisé en ce que le tube d'amenée (23) et un tube d'évacuation (24) et/ou un tube de prélèvement (25) sont reçus au moyen de la pièce conformée à encastrer (2, 2').

5. Dispositif selon la revendication 4, caractérisé en ce que la pièce conformée à encastrer (2') est mise en place dans une ouverture dans un plateau de fermeture (130) agencé sur la bordure supérieure (120) du puits en béton (10).

6. Dispositif selon l'une quelconque des revendications 1, 3 ou 5, caractérisé en ce que la pièce conformée à encastrer (2, 2') est réalisée en forme de cylindre circulaire et est fabriquée en matière plastique renforcée par des fibres de verre.

7. Dispositif selon l'une quelconque des revendications précédentes, caractérisé en ce que la paroi latérale du puits en béton (10) est revêtue à l'intérieur d'une nappe de drainage (1).

8. Dispositif selon la revendication 7, caractérisé en ce que la nappe de drainage (1) est formée par une structure emmêlée masquée des deux côtés avec un voile.

9. Dispositif selon l'une ou l'autre des revendications 1, 3 et 4, caractérisé en ce qu'un filtre (4 ; 4' ; 4") est agencé dans la pièce conformée à encastrer (2, 2'), lequel est subdivisé en deux zones voisines (41a, 41b ; 4a', 4b' ; 4a", 4b") de telle sorte que des impuretés ne parviennent que dans une zone (4 la ; 4a' ; 4b").

10. Dispositif selon la revendication 9, caractérisé en ce que les deux zones (41a, 41b) sont séparées l'une de l'autre par une tôle de séparation (42) à perforation grossière agencée verticalement et s'étendant transversalement sur la largeur du filtre (4), et en ce qu'il est prévu, sur l'arête inférieure de la tôle de séparation (42), une tôle de fond circulaire (41) à perforation fine agencée horizontalement.

11. Dispositif selon la revendication 10, caractérisé en ce que l'arête latérale de la tôle de fond circulaire (41) à perforation fine agencée horizontalement est reliée à une bordure latérale cylindrique circulaire (43) du filtre (4) à perforation fine.

12. Dispositif selon la revendication 9, caractérisé en ce que l'une des zones (4b') est perforée et bombée, et l'autre zone (4a') est de forme circulaire annulaire, son petit diamètre correspondant au diamètre de la zone bombée (4b') et étant relié à son arête (40').

13. Dispositif selon la revendication 9, caractérisé en ce que les eaux pluviales non purifiées sont guidées sur une zone de filtrage inclinée (4a"), et en ce que les impuretés déposées sur l'une des zones de filtrage (4a") parviennent jusque dans l'autre zone (4b") à l'aide des eaux pluviales successives non purifiées et sont amenées dans une conduite d'évacuation (71"), la zone de filtrage inclinée (4a") étant étanche par rapport à une zone de collecte (7").

14. Dispositif selon l'une quelconque des revendications précédentes, caractérisé en ce qu'au moins une fente longitudinale (21) est ménagée dans la paroi latérale (20) de la pièce conformée à encastrer (2) en bas approximativement à la hauteur de la tôle de fond (41) du filtre.

15. Dispositif selon l'une quelconque des revendications précédentes, caractérisé en ce que le filtre (4, 4', 4") et le ruban de serrage (50, 70, 73) sont réalisés en un matériau inoxydable, tel que de l'acier spécial V2A.
